# EUROPEAN PATENT SPECIFICATION

(11) **EP 4 129 443 B1**
(45) Date of publication and mention of the grant of the patent: **12.06.2024**
(21) Application number: 20927316.8
(22) Date of filing: 24.08.2020
(51) Int. Cl.: B01D 39/14, B01D 71/36, B32B 27/12, B01D 39/16, A41D 13/11, A62B 23/02, B01D 67/00, B32B 5/02, D04H 1/56, D04H 1/4291, B01D 46/00, B01D 69/02, B01D 69/10, B01D 71/02, B32B 27/32, B32B 27/16, B01D 69/12

(54) **POLYTETRAFLUOROETHYLENE COMPOSITE FILTER MATERIAL**
VERBUNDFILTERMATERIAL AUS POLYTETRAFLUORETHYLEN
MATÉRIAU FILTRANT COMPOSITE DE POLYTÉTRAFLUOROÉTHYLÈNE

(30) Priority: 27.03.2020 CN 202010230239
(43) Date of publication of application: 08.02.2023
(73) Proprietor: Zhonghao Chenguang Research Institute of Chemical Industry Co., Ltd., Zigong, Sichuan 643201 (CN)
(72) Inventor: XIAO, Ping, Zigong, Sichuan 643201 (CN); XIAO, Zhongliang, Zigong, Sichuan 643201 (CN); CAI, Chunyang, Zigong, Sichuan 643201 (CN); TANG, Yi, Zigong, Sichuan 643201 (CN); LI, Hui, Zigong, Sichuan 643201 (CN); SU, Jian, Zigong, Sichuan 643201 (CN)
(74) Representative: Dilg, Haeusler, Schindelmann Patentanwaltsgesellschaft mbH
(86) International application number: PCT/CN2020/110705
(87) International publication number: WO 2021/189762

(56) References cited:
- EP-A1- 1 750 493
- EP-A2- 2 196 485
- WO-A1-00/62900
- WO-A1-98/50597
- WO-A2-2008/048349
- CN-A- 101 255 544
- CN-A- 101 362 035
- CN-A- 101 804 275
- CN-A- 106 237 714
- CN-A- 107 151 861
- CN-U- 205 556 986
- KR-A- 20050 046 872
- KR-A- 20080 098 115
- US-A1- 2018 080 148

## Description

### Cross-reference to related application

The present application claims priority to Chinese Patent Application No. 202010230239.3 filed on March 27, 2020, entitled "Polytetrafluoroethylene Composite Filter Material'.

### Technical Field

The present invention relates to a polytetrafluoroethylene composite filter material.

### Background Art

Viruses and bacteria spread through the air and cause various infectious diseases, which have been threatening the safety of human beings all along. Wearing a mask is an effective way commonly used to prevent virus infection and spread. After bacteria and viruses are blocked by filter media of an ordinary protective mask, they will still exist in the filter media, and under certain conditions, there will be opportunities for infectious diseases to harm human beings. Therefore, an air-purifying filter material with higher filtering efficiency and filtering precision as well as the functions of sterilization and virus killing meets the demands of human health better.

Polytetrafluoroethylene film is a flexible and elastic microporous material with high porosity, uniform pore size distribution, air permeability and water impermeability. It can be used for air dust removal, sterilization and filtration and the like, and has many outstanding advantages that traditional filtration membranes do not have. At present, the filter material with polytetrafluoroethylene microporous film as the filter layer has low respiratory resistance and high filtering efficiency, mainly acts by physical barrier and does not have sterilization effect. Bacteria and viruses will still exist in the filter media after being blocked by the filter media, and there is still a risk of harming human beings.

Carbon nanomaterials refer to carbon materials with at least one dimension smaller than 100nm in dispersed phase, which have excellent optical, electrical and mechanical properties and have important application prospects in material science, energy, biomedicine and drug delivery and the like. At present, it is reported that carbon nanomaterials such as graphene oxide or carbon nanotubes are used as filter materials with antibacterial activity, but neither graphene oxide nor carbon nanotubes have sufficiently high antibacterial activity. Nano silver has good antibacterial and inactivating properties. Plating silver ions on the surface of graphene or carbon nanotubes is an effective method for improving the antibacterial activity of carbon nanomaterials. However, silver ions tend to aggregate in silver-plated carbon nanomaterials obtained by electroless plating, which limits improvement in antibacterial activity.

CN 101804275 A describes a nano photocatalyst-active carbon fiber composite filter medium. The nano photocatalyst-active carbon fiber composite filter medium is characterized in that the filter medium consists of a nano photocatalyst-active carbon fiber non-woven fabric and a filter base material, wherein the nano photocatalyst-active carbon fiber non-woven fabric comprises the following components in percentage by weight: 0.5 to 1.0 percent of nano photocatalyst, 1.0 to 4.0 percent of nano active carbon and 95 to 98.5 percent of carrier resin.

### Summary of the Invention

For the deficiencies in the prior art, the present invention provides a polytetrafluoroethylene composite filter material for air purification, which can effectively filter ultrafine particles such as PM2.5 and aerosols containing bacteria and viruses, and has high resistance to bacteria and viruses, and good air permeability and adsorption at the same time.

Specifically, in order to achieve the above objects, the present invention adopts the following technical solutions:
A polytetrafluoroethylene composite filter material comprising a supporting layer and a polytetrafluoroethylene film layer, wherein the supporting layer is formed by silver-plated carbon nanomaterial-modified meltblown nonwoven fabric, wherein the polytetrafluoroethylene composite filter material is prepared by fiberizing a resin material modified by silver-plated carbon nanomaterials on the surface of a polytetrafluoroethylene film by a melt-blowing method, and wherein carbon nanomaterials refer to carbon materials with at least one dimension smaller than 100 nm.

Preferably, in the above polytetrafluoroethylene composite filter material, the supporting layer has a thickness of 80 to 130µm.

Preferably, in the above polytetrafluoroethylene composite filter material, the silver-plated carbon nanomaterial-modified meltblown nonwoven fabric is one or more of silver-plated carbon nanomaterial-modified PP meltblown nonwoven fabric, silver-plated carbon nanomaterial-modified PET meltblown nonwoven fabric and silver-plated carbon nanomaterial-modified PA meltblown nonwoven fabric.

Preferably, in the above polytetrafluoroethylene composite filter material, the silver-plated carbon nanomaterial is silver-plated graphene oxide, silver-plated single-walled carbon nanotube or silver-plated fullerene.

Preferably, in the above polytetrafluoroethylene composite filter material, the silver-plated carbon nanomaterial is prepared by plating silver on the carbon nanomaterial substrate by pulsed laser deposition.

Preferably, in the above polytetrafluoroethylene composite filter material, the pulsed laser deposition is performed at a frequency of 10 to 15Hz, the temperature of the substrate is 380 to 500°C during the deposition process, and the time for deposition is 10 to 15min.

Preferably, in the above polytetrafluoroethylene composite filter material, the polytetrafluoroethylene film has a thickness of 5 to 50µm, an average pore diameter of 0.1 to 1µm, and a porosity of 80% to 90%.

Preferably, the resin material is PP resin, PET resin or PA resin.

Preferably, in the above polytetrafluoroethylene composite filter material, the resin material modified by the silver-plated carbon nanomaterial is prepared by uniformly mixing the silver-plated carbon nanomaterial and the resin material in a mass ratio of (3 to 8):100.

Preferably, in the above polytetrafluoroethylene composite filter material, the polytetrafluoroethylene film is a polytetrafluoroethylene film pretreated by radiation treatment, plasma treatment or high temperature treatment.

The present invention also provides the use of the polytetrafluoroethylene composite filter material in air purification equipment or masks.

In the present invention, a polytetrafluoroethylene microporous film with the characteristics of high air permeability and high filtering efficiency is combined on line with a silver-plated carbon nanomaterial-modified meltblown nonwoven fabric with high antibacterial activity to obtain the polytetrafluoroethylene composite filtration material which combines the functions of filtration and sterilization together. As a result, the composite material not only has high filtering efficiency, waterproofness and air permeability, but also has the functions of sterilization and virus killing, such that good isolation effect is provided, and the service life of the filtration material is prolonged greatly. Furthermore, the PTFE film is improved effectively in its viscosity after pretreatment.

The beneficial effects of the present invention are mainly as follows:
(1) The polytetrafluoroethylene composite filter material of the present invention can effectively isolate PM2.5 particles, bacteria and viruses while maintaining a sense of smooth breathing by utilizing the small pore size and high porosity of the polytetrafluoroethylene microporous film.
(2) The silver-plated carbon nanomaterial-modified meltblown nonwoven fabric used in the polytetrafluoroethylene composite filter material of the present invention not only has a certain sterilizing ability, but also has a large specific surface area and strong adsorption capacity, which increases the probability of contact between nano silver and bacterial liquid, thereby achieving strong antibacterial effect. Silver plating by pulsed laser deposition process can prevent agglomeration among silver particles and improve the antibacterial activity thereof.
(3) The polytetrafluoroethylene composite filter material of the present invention is prepared by online combination, which shortens the technological process, can also improve the output per unit time while ensuring the air permeability of the filter material, saves energy and reduces the cost.

### Specific Modes for Carrying Out the Embodiments

The following specific Examples will further explain the present invention in detail, but are not intended to limit the scope of the invention.

If the specific test steps or conditions are not indicated in the Examples, it shall be carried out according to the technology or conditions described in the literature in the art. The reagents and instruments used can be purchased through the market if the manufacturer is not indicated.

The PTFE films used in the Examples are CGPMH series PTFE microporous films from Zhonghao Chenguang Research Institute of Chemical Industry, which has a thickness of 30µm, an average pore size of 0.25µm and a porosity of 85%; graphene oxide, single-walled carbon nanotubes and fullerenes were all purchased from Nanjing XFNANO Materials Tech Co.,Ltd; PP resin, PET resin and PA resin were all purchased from DuPont Company, USA.

### Example 1

Example 1 provides a polytetrafluoroethylene composite filter material used for air purification comprising a supporting layer and a polytetrafluoroethylene film layer, wherein the supporting layer is a PP meltblown nonwoven fabric modified silver-plated single-walled carbon nanotubes, with a thickness of 100µm.

The polytetrafluoroethylene composite filter material was prepared by the following method:
(1) pretreatment of single-walled carbon nanotubes: 5g of single-walled carbon nanotubes were weighed and added into a three-necked flask containing 200mL of mixed solution of concentrated nitric acid and concentrated sulfuric acid (at mass ratio of 70:30), and the resultant was heated to reflux in an oil bath at 120°C for 5h, then subjected to suction filtration after cooling, washing with deionized water, and drying;
(2) silver plating: the silver plating was performed at room temperature in N₂ atmosphere, with high purity metallic silver as the target, pre-treated single-walled carbon nanotubes as the substrate, under the following conditions: the pulse frequency of pulsed laser was 10Hz, the temperature of the substrate was maintained at 400°C during the deposition process, and the time for deposition was 10min;
(3) the silver-plated single-walled carbon nanotubes obtained in step (2) was uniformly mixed with PP resin at a mass ratio of 3:100 to obtain PP resin modified by 3% silver-plated single-walled carbon nanotubes;
(4) pretreatment of the polytetrafluoroethylene film: the polytetrafluoroethylene film was added into a plasma generator, the system of the plasma generator was vacuumized to 1.33Pa firstly, then trace amount of argon was introduced to adjust the vacuum degree to 133.32Pa, and the plasma generator was electrified to act for 15min;
(5) combination: a layer of polytetrafluoroethylene film treated by low temperature plasma was laid on the receiving roller of the melt-blown nonwoven fabric making machine, and PP resin modified with 3% silver-plated single-walled carbon nanotubes was extruded in molten state from the spinneret orifice of the meltblowing machine, and was uniformly jetted on one side of the polytetrafluoroethylene film under the high-speed traction of air flow to obtain the polytetrafluoroethylene composite filter material, wherein the temperature of the hot air was 200°C, the receiving distance was 12cm, the traverse speed was 0.5m/min, and the extrusion volume was 40g/min.

### Example 2

Example 2 provides a polytetrafluoroethylene composite filter material used for air purification comprising a supporting layer and a polytetrafluoroethylene film layer, wherein the supporting layer is a PP meltblown nonwoven fabric modified by silver-plated graphene oxide, with a thickness of 100µm.

The polytetrafluoroethylene composite filter material was prepared by the following method:
(1) pretreatment of graphene oxide: 2g of graphene oxide were weighed and added into a three-necked flask containing 200mL of a mixed solution of concentrated nitric acid and concentrated sulfuric acid (at a mass ratio of 70:30), and the resultant was heated to reflux it in an oil bath at 120°C for 5h, then subjected to suction filtration after cooling, washing with deionized water, and drying;
(2) silver plating: the silver plating was performed at room temperature in N₂ atmosphere, with high-purity metallic silver as target, pre-treated graphene oxide as substrate, under the following conditions: the pulse frequency of pulsed laser was 10Hz, the temperature of substrate was maintained at 400°C during the deposition process, and the time for deposition was 10min;
(3) the silver-plated graphene oxide obtained in step (2) was uniformly mixed with PP resin at a mass ratio of 3:100 to obtain PP resin modified by 3% silver-plated graphene oxide;
(4) pretreatment of polytetrafluoroethylene film: the polytetrafluoroethylene film was added into a plasma generator, the system of the plasma generator was vacuumized to 1.33Pa first, then trace amount of argon was introduced to adjust the vacuum degree to 133.32Pa, and the plasma generator was electrified to act for 15min;
(5) combination: a layer of polytetrafluoroethylene film after plasma treatment was laid on the receiving roller of the melt-blown nonwoven fabric making machine, and PP resin modified with 3% of silver-plated graphene oxide was extruded in molten state from the spinneret orifice of the meltblowing machine, and was uniformly jetted on one side of the polytetrafluoroethylene film under the high-speed traction of air flow to obtain the polytetrafluoroethylene composite filter material, wherein the temperature of the hot air was 200°C, the receiving distance was 12cm, and the traverse speed was 0.5m/min, and the extrusion volume was 40g/min.

### Example 3

Example 3 provides a polytetrafluoroethylene composite filter material used for air purification comprising a supporting layer and a polytetrafluoroethylene film layer, wherein the supporting layer is a PP meltblown nonwoven fabric modified by silver-plated fullerene, with a thickness of 100µm.

The polytetrafluoroethylene composite filter material was prepared by the following method:
(1) pretreatment of fullerene: 5g of fullerene were weighed and added into a three-necked flask containing 200mL of a mixed solution of concentrated nitric acid and concentrated sulfuric acid (at a mass ratio: 70:30), and the resultant was heated to reflux in an oil bath at 120°C for 5h, then subjected to suction filtration after cooling, washing with deionized water, and drying;
(2) silver plating: the silver plating was performed at room temperature in N₂ atmosphere, with high-purity metallic silver as target, pre-treated fullerene as substrate, under the following conditions: the pulse frequency of pulsed laser was 10Hz, the temperature of the substrate was maintained at 400°C during the deposition process, and the time for deposition was 10min;
(3) the silver-plated fullerene obtained in step (2) was uniformly mixed with PP resin at a mass ratio of 3:100 to obtain PP resin modified by 3% silver-plated fullerene;
(4) pretreatment of polytetrafluoroethylene film: the polytetrafluoroethylene film was placed in propylene monomers, and then irradiated with γ-ray for 15min;
(5) combination: a layer of polytetrafluoroethylene film after radiation treatment was laid on the receiving roller of the melt-blown nonwoven fabric making machine, and PP resin modified with 3% of silver-plated fullerene was extruded in molten state from the spinneret orifice of the meltblowing machine, and was uniformly jetted on one side of the polytetrafluoroethylene film under the high-speed traction of air flow to obtain the polytetrafluoroethylene composite filter material, wherein the temperature of hot air was 200°C, the receiving distance was 12cm, and the traverse speed was 0.5m/min, and the extrusion volume was 40g/min.

### Example 4

Example 4 provides a polytetrafluoroethylene composite filter material used for air purification comprising a supporting layer and a polytetrafluoroethylene film layer, wherein the supporting layer is a PP meltblown nonwoven fabric modified by silver-plated graphene oxide, with a thickness of 85µm.

The polytetrafluoroethylene composite filter material was prepared by the following method:
Steps (1) to (2) were the same as those in Example 2.
(3) the silver-plated graphene oxide obtained in the step (2) was uniformly mixed with PP resin at a mass ratio of 5:100 to obtain PP resin modified by 5% silver-plated graphene oxide;
(4) pretreatment of the polytetrafluoroethylene film: the polytetrafluoroethylene film was added into a plasma generator, the system of the plasma generator was vacuumized to 1.33Pa firstly, then trace amount of argon was introduced to adjust the vacuum degree to 133.32Pa, and the plasma generator was electrified to act for 15min;
(5) combination: a layer of polytetrafluoroethylene film after plasma treatment was laid on the receiving roller of the melt-blown nonwoven fabric making machine, and PET resin modified with 5% of silver-plated graphene oxide was extruded in molten state from the spinneret orifice of the meltblowing machine, and was uniformly jetted on one side of the polytetrafluoroethylene film under the high-speed traction of air flow to obtain the polytetrafluoroethylene composite filter material, wherein the temperature of the hot air was 200°C, the receiving distance was 12cm, and the traverse speed was 0.5m/min, and the extrusion volume was 30g/min.

### Example 5

Example 5 provides a polytetrafluoroethylene composite filter material used for air purification comprising a supporting layer and a polytetrafluoroethylene film layer, wherein the supporting layer is a PA meltblown nonwoven fabric modified by silver-plated single-walled carbon nanotubes, with a thickness of 120µm.

The polytetrafluoroethylene composite filter material was prepared by the following method:
Steps (1) to (2) were the same as those in Example 2.
(3) the silver-plated graphene oxide obtained in step (2) was uniformly mixed with PA resin at a mass ratio of 8:100 to obtain PA resin modified by 8% silver-plated graphene oxide;
(4) pretreatment of polytetrafluoroethylene film: the polytetrafluoroethylene film was placed in propylene monomers, and then irradiated with γ-ray for 15min;
(5) combination: a layer of polytetrafluoroethylene film after radiation treatment was laid on the receiving roller of the melt-blown nonwoven fabric making machine, and PA resin modified with 8% silver-plated single-walled carbon nanotubes was extruded in molten state from the spinneret orifice of the meltblowing machine, and was uniformly jetted on one side of the polytetrafluoroethylene film under the high-speed traction of air flow to obtain the polytetrafluoroethylene composite filter material, wherein the temperature of the hot air was 200°C, the receiving distance was 12cm, and the traverse speed was 0.5m/min, and the extrusion volume was 52g/min.

### Comparative Example 1

Comparative Example 1 provides a polytetrafluoroethylene composite filter material used for air purification comprising a supporting layer, a silver-plated graphene layer and a polytetrafluoroethylene film layer, wherein the supporting layer is PP meltblown nonwoven fabric with a thickness of 100µm, and the silver-plated graphene layer has a thickness of 5µm.

The polytetrafluoroethylene composite filter material was prepared by the following method:
(1) preparation of PP meltblown nonwoven fabric: PP resin was extruded in molten state from a spinneret orifice of a meltblowing machine, and was uniformly jetted on a receiving roller under the high-speed traction of air flow to obtain PP meltblown nonwoven fabric, wherein the temperature of the hot air was 200°C, the receiving distance was 12cm, the traverse speed was 0.5m/min, and the extrusion amount was 40g/min;
(2) preparation of silver-plated graphene oxide film: silver was plated on graphene oxide by the same steps as the steps (1) to (2) in Example 2, and then the obtained silver-plated graphene oxide was dissolved in absolute ethanol solution, and then subjected to suction filtration so as to obtain the silver-plated graphene oxide film;
(3) pretreatment of polytetrafluoroethylene film: the polytetrafluoroethylene film was added into a plasma generator, the system of the plasma generator was vacuumized to 1.33Pa first, then trace amount of argon was introduced to adjust the vacuum degree to 133.32Pa, and the plasma generator was electrified to act for 15min;
(4) PP meltblown nonwoven fabric, graphene film and polytetrafluoroethylene film were laminated and combined to obtain polytetrafluoroethylene composite filter material.

### Comparative Example 2

Comparative Example 2 provides a polytetrafluoroethylene composite filter material used for air purification comprising a supporting layer and a polytetrafluoroethylene film layer, wherein the supporting layer is a PP meltblown nonwoven fabric modified by silver-plated graphene oxidem with a thickness of 100µm.

The polytetrafluoroethylene composite filter material was prepared by the following method:
Steps (1) to (4) were the same as those in Example 2.
(5) combination: PP resin modified by 3% silver-plated graphene oxide was extruded in molten state from the spinneret orifice of the meltblowing machine, and was uniformly jetted on the receiving roller under the high-speed traction of air flow to obtain PP meltblown nonwoven fabric, wherein the temperature of the hot air was 200°C, the receiving distance was 12cm, the traverse speed was 0.5m/min, and the extrusion amount was 40g/min. PUR adhesive was uniformly coated on one side of the obtained silver-plated graphene oxide-modified PP meltblown nonwoven fabric with a coating amount of 1.6g/m², the adhesive coating surface of the silver-plated graphene oxide-modified PP meltblown nonwoven fabric was overlapped with the low-temperature plasma treated polytetrafluoroethylene film, subjected to pressurizing and heating treatment, carried out at a temperature of 55°C under a pressure of 2.1MPa, to make them adhere to each other, and finally subjected to curing treatment at 58°C for 10h to obtain the polytetrafluoroethylene composite filter material of the present Comparative Example.

### Experimental Example

The air permeability, filtering efficiency and antibacterial rate of the polytetrafluoroethylene composite filter materials prepared in the above Examples and Comparative Examples were measured, and the results were shown in Table 1. Among them, the air permeability measurement was carried out according to GBT 1038-2000 "Plastics-Film and sheeting-Determination of gas transmission", measurement of the filtering efficiency was carried out according to GB 2626-2019 "Respiratory Protection-Non-powered air-purifying particle respirator", and the antibacterial rate was carried out according to GBT 20944.3-2008 "Textiles-Evaluation for antibacterial activity".

**Table 1**

| Item | Example 1 | Example 2 | Example 3 | Example 4 | Example 5 | Comparative Example 1 | Comparative Example 2 |
|---|---|---|---|---|---|---|---|
| Air permeability | 94% | 93% | 96% | 95% | 92% | 93% | 87% |
| Filtering efficiency | 98.6% | 98.7% | 99.2% | 98.1% | 98.4% | 96.5% | 95.2% |
| Antibacterial rate | 99.5% | 99.9% | 99.7% | 99.9% | 99.8% | 98.3% | 99.1% |

Although the present invention has been described in detail by general description, specific embodiments and experiments in the above, it is obvious to a person skilled in the art that some modifications or improvements can be made on the basis of the present invention. Therefore, all these modifications or improvements made without departing from the spirit of the present invention belong to the scope of the present invention.

### Industrial applicability

The present invention provides a polytetrafluoroethylene composite filter material. The polytetrafluoroethylene composite filter material comprises a supporting layer and a polytetrafluoroethylene film layer, wherein the supporting layer is a silver-plated carbon nanomaterial-modified meltblown nonwoven fabric. The polytetrafluoroethylene composite filter material is prepared by fiberizing a resin material modified by silver-plated carbon nanomaterial on the surface of a polytetrafluoroethylene film by a melt-blowing method. The polytetrafluoroethylene composite filter material of the present invention combines filtering and sterilizing functions, has higher filtering efficiency and filtering precision, has the functions of sterilizing and killing viruses, has a good isolation effect, greatly prolongs the service life of the filter material, and has better economic value and application prospect.

## Claims

1. A polytetrafluoroethylene composite filter material, **characterized by** comprising a supporting layer and a polytetrafluoroethylene film layer, wherein the supporting layer is a silver-plated carbon nanomaterial-modified meltblown nonwoven fabric,
wherein the polytetrafluoroethylene composite filter material is prepared by fiberizing a resin material modified by silver-plated carbon nanomaterials on the surface of a polytetrafluoroethylene film by a melt-blowing method, and
wherein carbon nanomaterials refer to carbon materials with at least one dimension smaller than 100 nm.

2. The polytetrafluoroethylene composite filter material according to claim 1, wherein the supporting layer has a thickness of 80 to 130 µm.

3. The polytetrafluoroethylene composite filter material according to claim 1 or 2, wherein the silver-plated carbon nanomaterial-modified meltblown nonwoven fabric is one or more of silver-plated carbon nanomaterial-modified PP meltblown nonwoven fabric, silver-plated carbon nanomaterial-modified PET meltblown nonwoven fabric and silver-plated carbon nanomaterial-modified PA meltblown nonwoven fabric.

4. The polytetrafluoroethylene composite filter material according to any one of claims 1 to 3, wherein the silver-plated carbon nanomaterial is silver-plated graphene oxide, silver-plated single-walled carbon nanotubes or silver-plated fullerene.

5. The polytetrafluoroethylene composite filter material according to any one of claims 1 to 4, wherein the silver-plated carbon nanomaterial is prepared by plating silver on the carbon nanomaterial substrate by pulsed laser deposition.

6. The polytetrafluoroethylene composite filter material according to claim 5, wherein the pulsed laser deposition is performed at a pulse frequency of 10 to 15Hz, the temperature of the substrate during the deposition process is 380 to 500°C, and the time for deposition is 10 to 15 min.

7. The polytetrafluoroethylene composite filter material according to any one of claims 1 to 6, wherein the polytetrafluoroethylene film has a thickness of 5 to 50µm, an average pore diameter of 0.1 to 1µm, and a porosity of 80% to 90%.

8. The polytetrafluoroethylene composite filter material according to any one of claims 1 to 7, wherein the resin material is PP resin, PET resin or PA resin.

9. The polytetrafluoroethylene composite filter material according to claim 8, wherein the resin material modified by silver-plated carbon nanomaterial is prepared by uniformly mixing the silver-plated carbon nanomaterial and the resin material at a mass ratio of (3 to 8): 100.

10. The polytetrafluoroethylene composite filter material according to claim 8 or 9, wherein the polytetrafluoroethylene film is a polytetrafluoroethylene film pretreated by radiation treatment, plasma treatment or high temperature treatment.

## Patentansprüche

1. Polytetrafluorethylen-Verbundfiltermaterial, **dadurch gekennzeichnet, dass** es eine Trägerschicht und eine Polytetrafluorethylen-Filmschicht umfasst, wobei die Trägerschicht ein mit versilberten Kohlenstoff-Nanomaterialien modifizierter, schmelzgeblasener Vliesstoff ist,
wobei das Polytetrafluorethylen-Verbundfiltermaterial durch Faserung eines mit versilberten Kohlenstoff-Nanomaterialien modifizierten Harzmaterials auf der Oberfläche eines Polytetrafluorethylen-Films durch ein Schmelzblasverfahren hergestellt ist, und
wobei sich Kohlenstoff-Nanomaterialien auf Kohlenstoffmaterialien mit mindestens einer Dimension kleiner als 100 nm beziehen.

2. Polytetrafluorethylen-Verbundfiltermaterial nach Anspruch 1, wobei die Trägerschicht eine Dicke von 80 bis 130 µm aufweist.

3. Polytetrafluorethylen-Verbundfiltermaterial nach Anspruch 1 oder 2, wobei der mit versilbertem Kohlenstoff-Nanomaterial modifizierte, schmelzgeblasene Vliesstoff einer oder mehrere von mit versilbertem Kohlenstoff-Nanomaterial modifizierten, schmelzgeblasenen PP-Vliesstoff, mit versilbertem Kohlenstoff-Nanomaterial modifizierten, schmelzgeblasenen PET-Vliesstoff und mit versilbertem Kohlenstoff-Nanomaterial modifizierten, schmelzgeblasenen PA-Vliesstoff ist.

4. Polytetrafluorethylen-Verbundfiltermaterial nach einem der Ansprüche 1 bis 3, wobei das versilberte Kohlenstoff-Nanomaterial versilbertes Graphenoxid, versilberte einwandige Kohlenstoff-Nanoröhren oder versilbertes Fulleren ist.

5. Polytetrafluorethylen-Verbundfiltermaterial nach einem der Ansprüche 1 bis 4, wobei das versilberte Kohlenstoff-Nanomaterial durch Aufbringen von Silber auf das Kohlenstoff-Nanomaterial-Substrat durch gepulste Laserabscheidung hergestellt wird.

6. Polytetrafluorethylen-Verbundfiltermaterial nach Anspruch 5, wobei die gepulste Laserabscheidung mit einer Pulsfrequenz von 10 bis 15 Hz durchgeführt wird, die Temperatur des Substrats während des Abscheidungsprozesses 380 bis 500 °C beträgt und die Zeit für die Abscheidung 10 bis 15 Minuten beträgt.

7. Polytetrafluorethylen-Verbundfiltermaterial nach einem der Ansprüche 1 bis 6, wobei der Polytetrafluorethylenfilm eine Dicke von 5 bis 50 µm, einen durchschnittlichen Porendurchmesser von 0,1 bis 1 µm und eine Porosität von 80% bis 90% aufweist.

8. Polytetrafluorethylen-Verbundfiltermaterial nach einem der Ansprüche 1 bis 7, wobei das Harzmaterial PP-Harz, PET-Harz oder PA-Harz ist.

9. Polytetrafluorethylen-Verbundfiltermaterial nach Anspruch 8, wobei das mit versilbertem Kohlenstoff-Nanomaterial modifizierte Harzmaterial durch gleichmäßiges Mischen des versilberten Kohlenstoff-Nanomaterials und des Harzmaterials in einem Massenverhältnis von (3 bis 8):100 hergestellt wird.

10. Polytetrafluorethylen-Verbundfiltermaterial nach Anspruch 8 oder 9, wobei der Polytetrafluorethylenfilm ein durch Strahlenbehandlung, Plasmabehandlung oder Hochtemperaturbehandlung vorbehandelter Polytetrafluorethylenfilm ist.

## Revendications

1. Matériau filtrant composite de polytétrafluoroéthylène, **caractérisé en ce qu'**il comprend une couche de support et une couche de film de polytétrafluoroéthylène, dans lequel la couche de support est un tissu non-tissé de fusion-soufflage modifié par un nanomatériau de carbone plaqué d'argent,
dans lequel le matériau filtrant composite de polytétrafluoroéthylène est préparé en fibrant un matériau de résine modifié par des nanomatériaux de carbone plaqué d'argent sur la surface d'un film de polytétrafluoroéthylène par un procédé de fusion-soufflage, et
dans lequel les nanomatériaux de carbone font référence à des matériaux de carbone avec au moins une dimension inférieure à 100 nm.

2. Matériau filtrant composite de polytétrafluoroéthylène selon la revendication 1, dans lequel la couche de support présente une épaisseur de 80 à 130 µm.

3. Matériau filtrant composite de polytétrafluoroéthylène selon la revendication 1 ou 2, dans lequel le tissu non-tissé de fusion-soufflage modifié par un nanomatériau de carbone plaqué d'argent est un ou plusieurs parmi un tissu non-tissé de fusion-soufflage de PP modifié par un nanomatériau de carbone plaqué d'argent, un tissu non-tissé de fusion-soufflage de PET modifié par un nanomatériau de carbone plaqué d'argent et un tissu non-tissé de fusion-soufflage de PA modifié par un nanomatériau de carbone plaqué d'argent.

4. Matériau filtrant composite de polytétrafluoroéthylène selon l'une quelconque des revendications 1 à 3, dans lequel le nanomatériau de carbone plaqué d'argent est un oxyde de graphène plaqué d'argent, des nanotubes de carbone à paroi unique plaqués d'argent ou du fullerène plaqué d'argent.

5. Matériau filtrant composite de polytétrafluoroéthylène selon l'une quelconque des revendications 1 à 4, dans lequel le nanomatériau de carbone plaqué d'argent est préparé en plaquant de l'argent sur le substrat de nanomatériau de carbone par dépôt laser pulsé.

6. Matériau filtrant composite de polytétrafluoroéthylène selon la revendication 5, dans lequel le dépôt laser pulsé est effectué à une fréquence d'impulsion comprise entre 10 et 15 Hz, la température du substrat pendant le processus de dépôt est compris entre 380 à 500°C, et le temps de dépôt est compris entre 10 à 15 min.

7. Matériau filtrant composite de polytétrafluoroéthylène selon l'une quelconque des revendications 1 à 6, dans lequel le film de polytétrafluoroéthylène a une épaisseur comprise entre 5 et 50 µm, un diamètre moyen de pore de 0,1 à 1 µm et une porosité de 80 % à 90 %.

8. Matériau filtrant composite de polytétrafluoroéthylène selon l'une quelconque des revendications 1 à 7, dans lequel le matériau de résine est une résine de PP, une résine de PET ou une résine de PA.

9. Matériau filtrant composite de polytétrafluoroéthylène selon la revendication 8, dans lequel le matériau de résine modifié par un nanomatériau de carbone plaqué d'argent est préparé en mélangeant uniformément le nanomatériau de carbone plaqué d'argent et le matériau de résine à un rapport massique de (3 à 8): 100.

10. Matériau filtrant composite de polytétrafluoroéthylène selon la revendication 8 ou 9, dans lequel le film de polytétrafluoroéthylène est un film de polytétrafluoroéthylène prétraité par traitement par rayonnement, traitement par plasma ou traitement à haute température.
